# EUROPEAN PATENT APPLICATION

(11) **EP 4 566 799 A1**
(43) Date of publication of application: **11.06.2025**
(21) Application number: 24157064.7
(22) Date of filing: 12.02.2024
(51) Int. Cl.: B29C 65/08, B29C 65/76, B29C 65/82, B32B 7/05, B32B 7/06, B32B 37/00, B32B 37/06, B29C 65/78, B29K 101/12, B32B 27/30, B32B 27/32

(54) **METHOD FOR PREPARING THERMOPLASTIC ROOFING MEMBRANE WITH PROTECTIVE FILM**

(30) Priority: 07.12.2023 US 202363607303 P
(71) Applicant: Holcim Technology Ltd, 6300 Zug (CH)
(72) Inventor: MASTRANGELO, John C., Oconomowoc, WI (US)
(74) Representative: Kraus & Lederer PartGmbB

(57) **Abstract**

A method of forming a roofing membrane composite including a thermoplastic membrane and a protective film, the method comprising (i) providing a thermoplastic roofing membrane, where the thermoplastic membrane includes a first planar surface and a second planar surface; (ii) providing a thermoplastic protective film, where the thermoplastic protective film includes a first planar surface and second planar surface; (iii) forming a pre-adhered composite by contacting the first planar surface of the thermoplastic roofing membrane with the second planar surface of the thermoplastic protective film; and (iv) subjecting the pre-adhered composite to ultrasonic welding to thereby removably weld the thermoplastic roofing membrane to the thermoplastic protective film and thereby form the composite.

## Description

### FIELD OF THE INVENTION

Embodiments of the present invention are directed toward a method for preparing thermoplastic roofing membrane composites that includes a removable protective film. According to embodiments of the invention, the protective file is attached to the membrane by using ultrasonic welding techniques.

### BACKGROUND OF THE INVENTION

Thermoplastic roofing membranes, which are also referred to as single ply thermoplastic roofing membranes, are commonly used to cover flat or low-sloped roofs. These membranes are often white in color, which serves several benefits including reflectivity of solar radiation. The membranes are advantageously installed by securing the membrane to the roof surface and thermally bonding (i.e. heat welding) adjacent membranes to each other to form a seam and thereby create a water-proof surface on the roof (i.e. a roofing membrane system).

A disadvantage of the white color of the membrane is that the membrane becomes stained or temporarily discolored during installation of the roof system. As those skilled in the art appreciate, this can be caused by foot traffic of the installers and/or from installation equipment, such as the welding equipment, used to form the seams. To address this issue, it is common for the installation process to conclude with a cleaning operation whereby the surface of the newly installed roof is cleaned. These operations, however, are time consuming and add to the overall cost of the roof installation.

### SUMMARY OF THE INVENTION

One or more embodiments of the present invention provide a method of forming a roofing membrane composite including a thermoplastic membrane and a protective film, the method comprising (i) providing a thermoplastic roofing membrane, where the thermoplastic membrane includes a first planar surface and a second planar surface; (ii) providing a thermoplastic protective film, where the thermoplastic protective film includes a first planar surface and second planar surface; (iii) forming a pre-adhered composite by contacting the first planar surface of the thermoplastic roofing membrane with the second planar surface of the thermoplastic protective film; and (iv) subjecting the pre-adhered composite to ultrasonic welding to thereby removably weld the thermoplastic roofing membrane to the thermoplastic protective film and thereby form the composite.

Other embodiments of the present invention provide a membrane composite comprising (i) a thermoplastic roofing membrane having a top planar surface and a bottom planar surface; and (ii) a thermoplastic protective film having a top planar surface and a bottom planar surface, where the thermoplastic protective film is removably attached to the thermoplastic membrane by a plurality of ultrasonic welds.

Yet other embodiments of the present invention provide a roof formed by a membrane prepared accordingly to aspects of the invention.

Still other embodiments of the present invention provide the use of a membrane prepared accordingly to aspects of the invention.

### BRIEF DESCRIPTION OF THE DRAWINGS

Fig. 1 is a perspective view of a roofing membrane composite including a protective film according to embodiments of the invention.
Fig. 2 is a perspective view of a roofing membrane composite including a protective film with perforations according to embodiments of the invention.
Fig. 3 is a perspective view of a roofing membrane composite including a seaming graphic according to embodiments of the invention.
Fig. 4 is a top plan view of a roofing membrane composite according to embodiments of the invention.

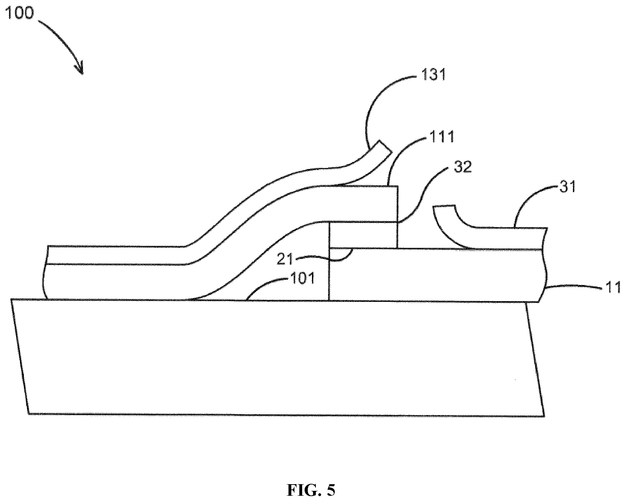

Fig. 5 is a cross-sectional view of a seam formed by practice of embodiments of the invention.

### DETAILED DESCRIPTION OF ILLUSTRATIVE EMBODIMENTS

### Introduction

Embodiments of the invention are based, at least in part, on the discovery of a thermoplastic roofing membrane composite that includes a removable, protective film that is attached to the membrane through ultrasonic welding. It has been discovered that the nature of the attachment between the protective film and the membrane is important to the overall success of the composite. For example, the nature of the attachment must be strong enough to endure foot traffic while at the same be weak enough to allow for relatively simple removal when it is desired. It has now been discovered that this balance can be achieved through a certain weld density. Additionally, where there is a desire to weld the protective film into the seam formed between membranes, it has now advantageously been discovered that an advantageous attachment between membrane and protective film can be achieved through ultrasonic welding that allows for efficient installation and removal of the film. And, not only has the use of ultrasonic welding provided an attachment that is desirable in nature and consistency across the membrane, but the use of ultrasonic welding has also proven to be highly efficient, which is highly advantageous in view of the amount of material that must be welded. The ultrasonic welding technique also offers an environmentally friendly means to attach the membrane to the film since bulk heating is not required.

### Membrane Composite

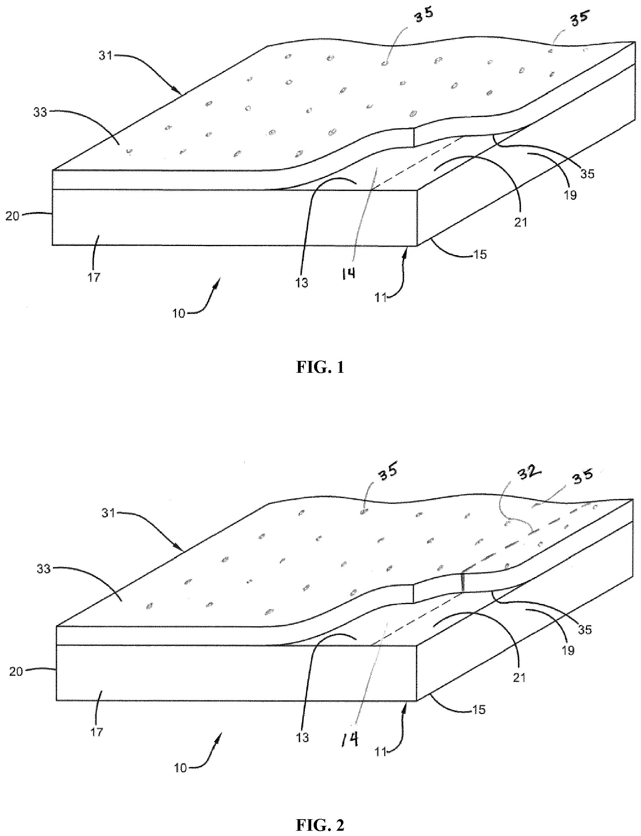

Composites prepared according to the present invention can be described with reference to Fig. 1, which shows composite 10 including a thermoplastic roofing membrane 11 having a top planar surface 13, a bottom planar surface 15, a first longitudinal edge 17, a second longitudinal edge opposite the first edge (not shown), a first lateral edge 19, and a second lateral edge 20. Lateral edge 19 helps define a lap region 21 that runs along lateral edge 19 on top planar surface 13. A similar lap region (not shown) runs along lateral edge 20 on top planar surface 13. The skilled person appreciates that a lap region (not shown) may also exist on bottom surface 15, along either lateral edge, and ultimately the lap region that forms a seam will be determined based upon the installation configuration. The portion of top planar surface 13 that is not within lap region 13 may be referred to as main planar surface 14. The width of the membrane can be defined from first lateral edge 19 to second lateral edge 20. The length of the membrane can be defined from first longitudinal edge 17 to the second longitudinal edge.

Protective film 31 is removably attached by ultrasonic welding to top planar surface 13 of membrane 11. Since protective film 31 is attached to membrane 11 by ultrasonic welding, composite 10 includes a plurality of welds 35, which may be referred to as weld points 35, or weld spots 35. As shown in Fig. 1, welds 35 are generally circular in nature and are arranged in a pattern across protective film 31. The nature and characteristics of welds 35 will be described in greater detail below. It should nonetheless be understood from Fig. 1 that the attachment between protective film 31 and membrane 11 is not continuous but instead is discontinuous and exists only at welds 35.

As shown, protective film 31 extends across the width of membrane 11 by extending from first lateral edge 19 to second lateral edge 20. In one or more embodiments, protective film 31 is positioned flush to lateral edge 19 and, in one or more embodiments, also flush to lateral edge 20. In other embodiments, protective film 31 is substantially flush to first lateral edge 19 and/or second lateral edge 20, which refers to the fact that it may not extend entirely from first lateral edge 19 to second lateral edge 20, but covers a sufficient amount of top surface 13 of membrane 11 so as to offer appreciable protection from dirt or staining and/or other temporary discoloring of the membrane during installation. In one or more embodiments, protective film 31 covers at least 95%, in other embodiments at least 97%, and in other embodiments at least 99% of top surface 13 of membrane 11 between first lateral edge 19 and second lateral edge 20.

As shown in Fig. 2, protective film 31 may include one or more perforations such as perforation 32. Perforations, which may also be referred to as perforation lines, include a series of hole or other disruptions within the protective film that may be formed my mechanical piercing, cutting or boring the protective film. In one or more embodiments, the perforations provide the ability to easily tear the protective film along the perforation. As shown, the perforation may extend in a generally straight line parallel to the lateral edge or edges of the membrane at a location proximate to where lap region 21 meets main body region 22 of membrane 11. The protective film may include a single perforation line proximate to a one lap region of the membrane, or in other embodiments the protective film may include two perforation lines, one proximate to each lap region on each lateral side of the film.

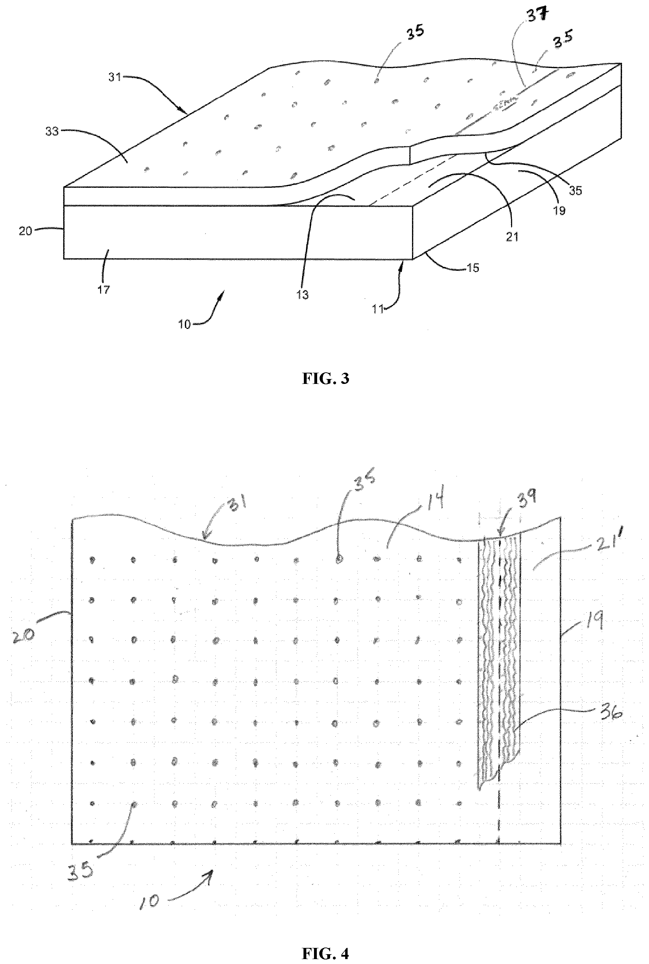

As shown in Fig. 3, protective film 31 may include a graphic 37 that is visible on the top surface of protective film 31. In one or more embodiments, graphic 37 includes a generally straight line or other indicia that provides a visual indication of the location, or approximately the location, where lap region 21 meets main body region 22 of membrane 11. The nature of the graphic may vary depending on preference and may include, without limitation, continuous lines, dashed lines, and chain lines. In one or more embodiments, the graphic therefore offers a guide for placement of an adjacent overlapping membrane when a seam is formed during installation. In one or more embodiments, a single graphic line exists on the protective film proximate to one lateral side, or in other embodiments the protective film may include two graphic lines, one proximate to each lap region on each lateral side of the film. In one or more embodiments, film 21 may include both graphic 37 and perforation 32.

### Roofing Membrane Characteristics

As suggested above, the membrane component of the composite is a thermoplastic roofing membrane, which may also be referred to as a single ply thermoplastic roofing membrane. Membranes of this nature may include those generally known in the art that are capable of providing a weather-proof outer layer to a roofing system, which refers to the fact that the membrane protects the roof from water and ultraviolet radiation. Thermoplastic roofing membranes include those that meet the specifications of ASTM 6878-03. These membranes may include scrim reinforcement; i.e. polymeric-extruded sheet sandwiching a reinforcement. The membranes may include multi-layered membranes with multiple coextruded layers as shown in, for example, U.S. Publication Nos. 2009/0137168, 2009/0181216, 2009/0269565, 2007/0193167, and 2007/0194482, which are incorporated herein by reference

The skilled person understands that thermoplastic roofing membranes generally include a thermoplastic polymer that forms a matrix of any given layer of the sheet, and one or more constituents of the membrane formulation may be discontinuous constituents of the sheet. For example, the thermoplastic polymer may serve as a matrix for fillers, flame retardants, and antidegradants.

Several thermoplastic polymers, and blends thereof, can be used to prepare the thermoplastic roofing membranes of this invention. These polymers may include, without limitation, reactor copolymers, propylene-based elastomers, ethylene-based block copolymers, and polyvinyl chloride. The skilled person understands that thermoplastic roofing membranes often include multiple layers, and the chemical composition of each layer can be the same or different. These differences can be based upon the additives used in each layer or the polymers used in each layers. Variation in polymers can include the use of distinct polymers or different blends of polymers, including variation in the blend of similar polymers. In this regard, U.S. Patent No. 6,451,897 and U.S. Publication Nos. 2021/0300007, 2021/0108418, 2019/0308395, 2018/0355616, 2018/0094439 and 2018/0023301 are incorporated herein by reference.

The thermoplastic roofing membranes may be characterized by their thickness. In one or more embodiments, the roofing membrane has a thickness of greater than 1 mm, in other embodiments greater 1.1 mm, in other embodiments greater than 1.2 mm, in other embodiments greater than 1.5 mm, and in other embodiments greater than 1.7 mm. In these or other embodiments, the roofing membrane has a thickness that is less than 2.8 mm, in other embodiments less than 2.6 mm, and in other embodiments less than 2.2 mm. In one or more embodiments, the roofing membrane has a thickness of from about 1 to about 3 mm, in other embodiments from about 1.2 to about 2.8 mm, in other embodiments from about 1.5 to about 2.6 mm, and in other embodiments from about 1.7 to about 2.2 mm.

The thermoplastic roofing membranes may be characterized by their width. In one or more embodiments, the roofing membrane has a width of greater than 0.7 m, in other embodiments greater than 1 m, and in other embodiments greater than 1.5 m. In these or other embodiments, the roofing membrane has a width that is less than 10 m, in other embodiments less than 7 m, in other embodiments less than 5, and in other embodiments less than 4 m. In one or more embodiments, the roofing membrane has a width of from about 0.7 to about 10 m, in other embodiments from about 1 to about 7 m, and in other embodiments from about 2 to about 5 m. As the skilled person appreciates, the length of the thermoplastic roofing membrane is typically greater than 20 m, in other embodiments 30 m, or in other embodiments 40 m, with the limitations typically deriving from manufacturing, storage, shipment, and handling constraints.

### Protective Film Characteristics

In one or more embodiments, the protective film, which may also be referred to as a protective layer, is a thermoplastic extruded sheet. As such, the protective film includes one or more thermoplastic polymers, which may be referred to as polymeric composition, that serve as a matrix in which optional constituents dispersed. These optional constituents may include filler, flame retardants, and antidegradants. In one or more embodiments, the thermoplastic polymers (polymeric composition) of the protective film may include the same polymers as the top and bottom layers (i.e. the matrix polymers forming the upper planar surface and bottom planar surface of the membrane) of the thermoplastic roofing membrane to which the protective film is removably bonded utilizing sonic welding. In one or more embodiments, the thermoplastic polymers of the protective film are different than the polymers of the top layer and the bottom layer of the thermoplastic roofing membrane to which the protective film is removably bonded utilizing sonic welding. In yet other embodiments, the thermoplastic polymers of the protective film are the same as the polymers of the top layer and the bottom layer of the thermoplastic roofing membrane to which the protective film is removably bonded utilizing sonic welding but present in different proportions. In one or more embodiments, the membrane includes a first polymer within the top surface layer of the membrane and a second polymer in the bottom surface layer of the membrane, and the protective film includes a blend of the first and second polymers. In one or more embodiments, the polymeric composition from which the protective film is produced is compatible with the top and bottom layers of the thermoplastic roofing membrane, as described below.

The protective film may be characterized by its thickness. In one or more embodiments, the protective film has a thickness of greater than 35 µm, in other embodiments greater than 45 µm, and in other embodiments greater than 55 µm. In these or other embodiments, the protective film has a thickness that is less than 150 µm, in other embodiments less than 100 µm, and in other embodiments less than 80 µm. In one or more embodiments, the protective film has a thickness of from about 35 to about 150 µm, in other embodiments from about 45 to about 100 µm, and in other embodiments from about 55 to about 80 µm.

### Compatibility

In particular sub-embodiments of the present invention, the protective film can be welded into a seam formed during installation of a roofing system. In order to provide the ability to weld the film into the seam and thereby form a seam that can withstand the requirement of a seam within a thermoplastic roofing system, the film and the thermoplastic membrane are selected to be compatible with each other. In particular, the protective film is compatible with the top planar surface of the membrane to which it is attached and it is also compatible with the bottom planar surface of the membrane to which it is attached (i.e. the opposite planar surface to which it is attached) so that it can be welded into a seam between the top planar surface of a first membrane and the bottom planar surface of an adjacent membrane. It is believed that compatibility allows for the ability to advantageously weld the protective film into the seam. Protective films that are compatible with the thermoplastic membrane and can therefore be welded into the seams are known in the art as described in WO 2023/172630, which is incorporated herein by reference.

In one or more embodiments, compatibility between the protective film and the roofing membrane is determined based upon the ability of the protective film to be welded between two layers of roofing membrane without having a deleterious impact on the weld from the standpoint of making a sufficient roofing seam. Stated differently, compatibility is based upon the ability of the roofing membrane and the protective film to be welded to each other and thereby form a bond of sufficient strength that can operate as a seam within a roofing system.

In one or more embodiments, compatibility is determined by welding the protective film between two scrim-reinforced thermoplastic roofing membranes to form a test seam, and subjecting the test seam to a peel test according to ASTM D413-2017 for separation strength of two flexible materials bonded together using one-inch wide samples with T-peel test at 20 in/min at room temperature. Where the test seam fails cohesively (e.g. failure occurs at the lamination surrounding the scrim reinforcement of either membrane or within the matrix of the membrane layers), then compatibility between the protective film and the roofing membrane is achieved. Failure (i.e. lack of compatibility) is determined where the test seam fails at the interface between the two roofing membranes (i.e. at or within the protective film), which may be referred to as adhesive failure. The skilled person appreciates that the adhesion strength required to establish compatibility is a function of the strength of the polymeric material that forms the membrane, as well as the strength of the weld between the membranes extrudates at the scrim, and thus a definitive strength cannot be provided for all roofing membranes. The ability to determine compatibility pursuant this invention can nonetheless be determined without undue calculation or experimentation.

### Nature of Attachment

In one or more embodiments, the degree of bonding between the protective film and the roofing membrane is sufficient (i.e. is of a strength) to withstand foot traffic (as may be experienced on a roof surface during installation) without becoming disengaged from the roofing membrane. On the other hand, the nature of the bond between the roofing membrane and the protective film is of an insufficient strength that allows for removal of the protective film from the roofing membrane by manual peeling techniques (e.g. an individual pulling on the film to thereby separate the film from the roofing membrane).

In one or more embodiments, the nature of the attachment between the protective film and the roofing membrane can be quantified based upon peel adhesion strength, which can be determined pursuant to ASTM D413-2017 for separation strength of two flexible materials bonded together using one-inch wide samples with T-peel test at 2 in/min. In one or more embodiments, the strength of the bond between the protective film and the roofing membrane, as determined by ASTM D413-2017 at room temperature is greater than 0.20, in other embodiments greater than 0.3, and in other embodiments greater than 0.35 lbf/in. It has been discovered that where the adhesion strength is below 0.2 lbf/in, the composite cannot withstand foot traffic that would be experienced on the roof during installation. In these or other embodiments, the peel adhesion strength between the protective film and the roofing membrane (ASTM D413-2017) is less than 2, in other embodiments less than 1.7, in other embodiments less than 1.5, in other embodiments less than 1.3, in other embodiments less than 1, in other embodiments less than 0.95, and in other embodiments less than 0.90 lbf/in. It has been discovered that were the adhesion strength is greater than 2 lbf/in, the protective film cannot be peeled away from the membrane following installation in a manner conducive to efficient installation of the roof system. In one or more embodiments, the peel adhesion strength between the protective film and the roofing membrane is from about 0.2 to about 2, in other embodiments from about 0.3 to about 1.7, in other embodiments from about 0.3 to about 1.5, in other embodiments from about 0.3 to about 1.3, in other embodiments from about 0.25 to about 1, in other embodiments from about 0.3 to about 0.95, and in other embodiments from about 0.35 to about 0.9 Ibf/in.

In one or more embodiments, the attachment between the protective film and the membrane, which is accomplished by ultrasonic welding, includes discrete welds. In other words, and as generally shown in Figs. 1-3, there exists specific areas where the film and membrane, which are in planar contact with each, are welded. Thus, while the discrete welds are sufficient to hold the film and membrane together as desired by practice of the invention, the attachment locations of attachment, which are referred to as welds, are discontinuous across the planar surfaces that are in contact.

In one or more embodiments, the nature of the attachment can be characterized by the weld density, also referred to as percent weld, between the film and the membrane. As the skilled person will appreciate, the weld density or percent weld is the fraction of the surface area of either substrate (i.e. the film or the membrane) that is welded. It will be appreciated that the remaining surface area is not welded. In practice, the weld density may be assumed from the welding equipment that is used. In other words, when the drum that is used in the welding operation is purchased, the drum will include a specification called "weld area", which is the fraction of the surface area of the drum that is raised, and which produces the weld upon welding. The weld density can also be quantified by analyzing the finished product. Several techniques can be used. For example, geometric analysis can be conducted using imaging (e.g. one can capture an image of the composite and use techniques to determine the fraction of weld area, which is visually evident, from the non-welded area). Also, the weld density can be quantified by using a weight analysis whereby one would weight the composite, remove the welds (e.g. by cutting them out of the composite), and then weigh the remaining material. In one or more embodiments, the weld density is greater than 10%, in other embodiments greater than 15%, in other embodiments greater than 18%, in other embodiments greater than 21%, in other embodiments greater than 24%, in other embodiments greater than 27%, and in other embodiments greater than 30%. In these or other embodiments, the weld density is less than 60%, in other embodiments less than 50%, in other embodiments less than 47%, in other embodiments less than 44%, in other embodiments less than 41%, in other embodiments less than 38%, and in other embodiments less than 35%. In one or more embodiments, the weld density is from about 10 to about 60%, in other embodiments from about 15 to about 47%, and in other embodiments from about 21 to about 35%.

The skilled person also appreciates that the ultrasonic welder can be operated in a fashion to create different stitch patterns. These stitch patterns may include serpentine, rope, dashed, and dotted patterns. The skilled person also understands that these geometries can be characterized as discrete or connected. For example, a dotted pattern is entirely discrete pattern, while a serpentine pattern is a connected pattern; although it will be understood that the welds are only connected in aspect or one dimension since the individual serpentine lines are discontinuous or disconnected.

In one or more embodiments, the nature of the welds is consistent across the width of the membrane (i.e. from lateral edge to lateral edge). In other words, the geometry of the welds and the weld density is constant across the width of the membrane. In other embodiments, the nature of the welds is changed or altered across the width of the membrane. For example, in one or more embodiments, and with reference to Fig. 1, a first weld density and/or pattern may exist in main body portion 14, and a second weld density and/or pattern may exist in lap region 21. In one or more embodiments, a higher weld density may exist in lap region 21. In these or other embodiments, a connected pattern, such as a serpentine pattern, may exist in lap region 21.

Yet other embodiments can be described with reference to Fig. 4, membrane composite 10 includes protective film 31 with a plurality of welds 35 within main body 14 securing protective film 31 to a membrane not shown. The membrane, which is positioned immediately below film 31, includes lap region that is contiguous with a lap region 21' of protective film 31. As shown, protective film 31 also includes a tear region 39, which is where protective film will be torn after an installation where a portion of protective film 31 is welded into a seam. As shown, tear region extends into main region 14 beyond lap region 21'. In one or more embodiments, tear region 39 extends at least 0.5, in other embodiments at least 1.0, and in other embodiments at least 1.5 inches into main region 14 beyond lap region 21'. Stated another way, the tear region extends +/- inches from interface between lap region 21 and body portion 14. For example, if lap region is 4 inches, and tear region extends into main region by 1.0 inch, tear region 39 will extend into membrane 5 inches from lateral edge 19. Likewise, in one or more embodiments, tear region extends into lap region 21'. In one or more embodiments, tear region 39 extends at least 0.5, in other embodiments at least 1.0, and in other embodiments at least 1.5 inches into lap region 21' from where lap region 21' terminates at main region 14.

In one or more embodiments, the nature of the weld between protective film 31 and the underlying membrane within tear region 39 is different than the nature of the weld in the remainder of main region 14. In one or more embodiments, tear region has a different weld density than main region 14. In these or other embodiments, tear region 39 has connected weld pattern within tear region 39 while the weld pattern with main region is not connected.

In one or more embodiments, the nature of the weld within tear region 39 is the same as the nature of the weld within lap region 21'. In other embodiments, the nature of the weld within tear region 39 is different that the weld within the remainder of lap region 21'.

### Method of Forming Membrane

As indicted above, the composites of the present invention are prepared by ultrasonically welding a protective film to a thermoplastic roofing membrane. Accordingly, the method of the present invention includes providing a thermoplastic roofing membrane and a protective film. The nature and characteristics of these components are set forth above.

According to one or more embodiments, a planar surface of a thermoplastic roofing membrane is brought into contact with a planar surface of a protective film. The two components (i.e. the membrane and the film), while in planar contact, are then fed through an ultrasonic welder and welded together. In one or more embodiments, the protective film is stretched and/or pulled taut in the cross-machine direction (i.e. from lateral edge to lateral edge) during the welding operation.

As the skilled person appreciates, the temporarily mated surfaces can be passed between an ultrasonic horn and a non-vibrating anvil where at least a portion of the mechanical energy from the ultrasonic movement of the horn is converted and transferred to the interface between the protective film and the membrane to thereby effect a temporary bond between the protective film and the membrane that is consistent with the teachings herein (e.g. withstand foot traffic while being intentionally removeable.

An ultrasonic welder, which may also be referred to as an ultrasonic vibration welder, typically includes a generator that generates an electrical frequency and an oscillator that converts the electrical frequency generated by the generator into mechanical vibration. A horn amplifies the vibration and causes a vibration transmission rod to perform flexural vibration. A pressure applicator applies pressure to the vibration transmission rod, which thereby causes friction between the two parts being welded together.

During operation, which may include a continuous process, the resonant frequency of the ultrasonic stack (horn + booster + converter), the line speed of the composite being welded, the amplitude of the horn displacement, the pressure between horn an anvil, and stitch pattern, can be adjusted to achieve a desired result, which is the peel strength outlined above.

In one or more embodiments, the ultrasonic welder is operated in a manner whereby the ultrasonic horn vibrates at a frequency of greater than 10, in other embodiments greater than 15, and in other embodiments greater than 20 KHz. In these or other embodiments, the ultrasonic horn vibrates at a frequency of less than 40, in other embodiments less than 35, and in other embodiments less than 30 KHz. In one or more embodiments, the ultrasonic horn vibrates at a frequency of from about 10 to about 40 KHz, in other embodiments from about 15 to about 35 KHz, and in other embodiments from about 20 to about 30 KHz.

In one or more embodiments, the ultrasonic welder is operated in a manner whereby the displacement of the ultrasonic horn has an amplitude of greater than 10, in other embodiments greater than 20, and in other embodiments greater than 30 microns. In these or other embodiments, the displacement of the ultrasonic horn has an amplitude of less than 80, in other embodiments less than 70, and in other embodiments less than 60 microns. In one or more embodiments, the displacement of the ultrasonic horn has an amplitude from about 10 to about 80 microns, in other embodiments from about 20 to about 70 microns, and in other embodiments from about 30 to about 60 microns.

In one or more embodiments, the ultrasonic welder is operated in a manner whereby the pressure between the ultrasonic horn and the anvil is greater than 20, in other embodiments greater than 30, and in other embodiments greater than 40 psi. In these or other embodiments, the pressure between the ultrasonic horn and the anvil is less than 100, in other embodiments less than 90, and in other embodiments less than 80 psi. In one or more embodiments, the pressure between the ultrasonic horn and the anvil is from about 20 to about 100 psi, in other embodiments from about 30 to about 90 psi, and in other embodiments from about 40 to about 80 psi.

In one or more embodiments, the ultrasonic welding takes place in a continuous process whereby the protective film is continuously delivered, along with the membrane, to a point where respective planar surfaces are temporarily mated to form a pre-welded composite, and then the pre-welded composite is continually fed to an ultrasonic welder at a desired line speed. In one or more embodiments, the line speed is greater than 1, in other embodiments greater than 2, and in other embodiments greater than 3 meters/minute. In these or other embodiments, the line speed is less than 15, in other embodiments less than 12, and in other embodiments less than 10 meters/minute. In one or more embodiments, the line speed is from about 1 to about 15 meters/minute, in other embodiments from about 2 to about 12 meters/minute, and in other embodiments from about 3 to about 10 meters/minute.

In one or more embodiments, the ultrasonic welding takes place at an environmental temperature (i.e. the temperature of the protective film and the membrane prior to welding) of from about 0 to about 40 °C, in other embodiments from about 15 to about 35 °C, and in other embodiments from about 25 to about 30 °C.

### Method of Installing Membrane

As indicated above, the membrane composites of the present invention can advantageously be installed on a roof surface, and then once the membranes are attached to the roof surface and welded together, the protective membrane can be removed to expose the upper surface of the membrane. It should therefore be appreciated that the protective film can operate to protect the membrane the during installation and be removed following installation. In one or more embodiments, the protective film is partially removed to reveal the lap edge of the membrane prior to welding adjacent membranes together. In other embodiments, the protective film is positioned between membranes during welding (i.e. it is left in place) and welded into the seam during the welding process.

In one or more embodiments, the installation method includes providing a first membrane composite and positioning the first membrane composite on a roof surface. The method then includes providing a second membrane composite and positioning the second membrane composite adjacent to the first membrane composite in an overlapping fashion so that the second membrane composite overlaps at least a portion of the lap region of the fist membrane composite. As the skilled person understands, this provides a pre-sealed lap (also referred to as a pre-seamed lap) that can be subsequently sealed or seamed by heat welding or heat bonding procedures. According to methods of the present invention, the method then includes heat welding the pre-seamed lap to thereby form a seam between the first membrane composite and the second membrane composite, where the heat welding incorporates at least a portion of the protective film of the first membrane composite within the lap region to be incorporated into the seam (i.e. within the weld). That is, it should be appreciated that the protective film is not removed from the seam area prior to heat welding and becomes incorporated into the weld.

After heat welding the membrane composites to each other, the method then includes removing the remainder of the protective film from the first composite membrane to thereby expose the top planar surface of the membrane, which is the portion of the top planar surface not involved in the weld.

Those skilled in the art appreciate that the process of this invention may include securing the first membrane composite to the roof deck and/or one of the intervening layers of the roof system prior to positioning the second membrane composite adjacent thereto or in an overlapping configuration. The skilled person also understands that completion of the roof system will also include removal of the protective film from the second membrane composite. That said, the process of the present invention may, of course, include positioning, attaching, welding, and removing the protective film from additional rows or columns of membrane composite that may be installed based upon the width of the roof.

The step of positioning the membrane composite may take place in a conventional manner. For example, positioning of the membrane composite may include unrolling a roll of the membrane composite and manually adjusting the composite to the desired location. The composite, and more specifically the roofing membrane of the composite, can be secured to the roof surface using conventional techniques. For example, the membrane can be secured to the roof surface by using mechanical fasteners. In other embodiments, the membrane can be secured to the roof surface by using an adhesive. In particular embodiments, the adhesive is a pressure-sensitive adhesive that is pre-applied to the membrane (e.g. factory applied). The skilled person understands that when installing a membrane of this nature (i.e. with a pre-applied adhesive), the step of securing the membrane to the roof surface may include removing a release member that may be carried by the membrane composite in order to protect the pre-applied pressure sensitive adhesive.

Likewise, the step of thermally welding the membranes together may take place by using conventional procedures. As the skilled person appreciates, adjacent membranes positioned in a pre-seamed lap can be thermally welded by using conventional hot-air welders. Many of these welders are designed to direct hot air to the top surface of the lower membrane and the lower surface of the upper membrane, subsequently contact the two heated surfaces, and then apply pressure to complete the weld. The skilled person understands that the degree of heating is sufficient to fuse the membranes together in a manner that is sufficient to withstand forces experienced on a roof surface. As noted above, these welds desirably withstand peel forces such that failure under a peel test occurs at the lamination in the membrane, not at the weld.

In one or more embodiments, the step of removing the protective film from the membrane composite includes manually removing the film. As the skilled person will appreciate, this may include one or more individuals peeling and edge of the film from the membrane so that a larger portion of the film can be secured or grasped by the individual, which allows the film to be pulled with greater force and ultimately removed from the roofing membrane.

Aspects of the invention can be understood with reference to Fig. 2, which shows roofing system 100 including substrate 101 and roofing membranes 11, 111 secured thereto. Roofing membranes 11, 111 are welded to each other to form a seam within lap region 21 of membrane 11 and lap region 121 of membrane 111. Roofing membrane 11 carries protective film 31, which is shown as being partially peeled away. Roofing membrane 111 carries protective film 131, which is shown as being partially peeled away. A portion 32 of protective film 31 is incorporated into the seam. The skilled person understands that while Fig. 2 shows roofing membranes 11, 111, as well as portion 32 of protective file 31, as distinct layers, the welding process will cause the layers to fuse together and they therefore may not have distinct separations as shown.

### Roof System

The thermoplastic membrane composites, as well as the methods of this invention, are useful for covering flat or low-sloped roofs to create a roofing system. Roofing systems are generally known in the art as generally disclosed in U.S. Publication Nos. 2022/0049063, 2021/0262233, and 2018/0094439, which are incorporated herein by reference. The substrate to which the thermoplastic membrane composites may be attached may include a roof deck, an insulation layer, a coverboard layer, or an existing layer of roofing membrane. Regardless of any intervening materials, the membrane may ultimately be mechanically attached to the roof deck using known techniques, which secure the membrane to the roof system in a manner that can withstand wind uplift forces as required by the industry.

Those skilled in the art appreciate that roof decks may include, for example, steel, concrete pads, wood beams, and foamed concrete. The insulation layer may include, for example, a layer of board stock (e.g. polyisocyanurate insulation board) or a layer or foam directly foamed in place. Where board stock is employed (i.e. insulation boards), these boards may carry a variety of facer materials including, but not limited to, paper facers, fiberglass-reinforced paper facers, fiberglass facers, coated fiberglass facers, metal facers such as aluminum facers, and solid facers such as wood. These boards are known as described in U.S. PatentNos. 6,117,375, 6,044,604, 5,891,563, 5,573,092, U.S. Publication Nos. 2004/0109983, 2003/0082365, 2003/0153656, 2003/0032351, and 2002/0013379, as well as U.S. Application Serial Nos. 10/640,895, 10/925,654, and 10/632,343, which are incorporated herein by reference. Coverboards may include wood sheeting (e.g. OSB), fiber boards, masonite board, wall board, gypsum board, gypsum products such as DensDeck, perlite boards, and high density foam boards. As with the insulation boards, these coverboards may carry facers on the opposed planar surfaces of the board.

Existing membranes may include cured rubber systems such as EPDM membranes, thermoplastic polymers systems such as TPO membranes, or asphalt-based systems such as modified asphalt membranes and/or built roof systems.

Various modifications and alterations that do not depart from the scope and spirit of this invention will become apparent to those skilled in the art. This invention is not to be duly limited to the illustrative embodiments set forth herein.

## Claims

1. A method of forming a roofing membrane composite including a thermoplastic membrane and a protective film, the method comprising:
(i) providing a thermoplastic roofing membrane, where the thermoplastic membrane includes a first planar surface and a second planar surface;
(ii) providing a thermoplastic protective film, where the thermoplastic protective film includes a first planar surface and second planar surface;
(iii) forming a pre-adhered composite by contacting the first planar surface of the thermoplastic roofing membrane with the second planar surface of the thermoplastic protective film; and
(iv) subjecting the pre-adhered composite to ultrasonic welding to thereby removably weld the thermoplastic roofing membrane to the thermoplastic protective film and thereby form the composite.

2. The method of claim 1, where said step of subjecting the pre-adhered composite to ultrasonic welding results in a weld density of from 10 to 50%, wherein the weld density is the fraction of the surface area of either substrate, i.e. the protective film or the thermoplastic membrane, that is welded.

3. The method of any of the preceding claims, where said step of subjecting the pre-adhered composite to ultrasonic welding results in a disconnected weld pattern.

4. The method of any of the preceding claims, where said step of subjecting the pre-adhered composite to ultrasonic welding results in a connected weld pattern.

5. The method of any of the preceding claims, where the pre-adhered composite includes a lap region and main region, and where said step of subjecting the pre-adhered composite to ultrasonic welding results in a first weld density within the main region and a second weld density within the lap region, and where the first weld density is distinct from the second weld density.

6. The method of any of the preceding claims, where the pre-adhered composite includes a tear region, and where said step of subjecting the pre-adhered composite to ultrasonic welding results in a first weld density within the tear region and a second weld density within at least a portion of the remainder of the composite.

7. The method of any of the preceding claims, where the pre-adhered composite includes a lap region and main region, and where said step of subjecting the pre-adhered composite to ultrasonic welding results in a first weld pattern within the main region and a second weld pattern within the lap region, and where the first weld pattern is distinct from the second weld pattern.

8. The method of any of the preceding claims, where the pre-adhered composite includes a tear region, and where said step of subjecting the pre-adhered composite to ultrasonic welding results in a first weld pattern within the tear region and a second weld pattern within at least a portion of the remainder of the composite.

9. The method of any of the preceding claims, where the thermoplastic protective film is welded to thermoplastic roofing membrane to create a peel strength, according to ASTM D413-2017 of from 35 to 350 N/m (0.2 to 2.0 lbf/in).

10. The method of any of the preceding claims, where the thermoplastic roofing membrane has a thickness of from 1.0 to 3.0 mm.

11. The method of any of the preceding claims, where the protective film has a thickness of from 35 to 150 µm

12. A membrane composite comprising:
(i) a thermoplastic roofing membrane having a top planar surface and a bottom planar surface; and
(ii) a thermoplastic protective film having a top planar surface and a bottom planar surface, where the thermoplastic protective film is removably attached to the thermoplastic membrane by a plurality of ultrasonic welds.

13. The membrane composite of claim 12, where the plurality of welds is **characterized by** a weld density of from 10 to 50%, wherein the weld density is the fraction of the surface area of either substrate, i.e. the protective film or the thermoplastic membrane that is welded.

14. The membrane composite of claim 12 or 13, where the plurality of welds is **characterized by** a single pattern.

15. The membrane composite of any of claims 12 to 14, where the plurality of welds is **characterized by** a multiple patterns.

16. The membrane composite of any of claims 12 to 15, where the thermoplastic roofing membrane has a width that is defined from a first lateral edge to an opposed lateral edge, and there the weld density is substantially equal across the width of the membrane.

17. The membrane composite of any of claims 12 to 16, where the thermoplastic roofing membrane has a width that is defined from a first lateral edge to an opposed lateral edge, and there first and second weld densities exist across the width of the membrane.

18. The membrane composite of any of claims 12 to 17, where the thermoplastic roofing membrane has a thickness of from 1.0 to 3.0 mm.

19. The membrane composite of any of claims 12 to 18, where the thermoplastic protective film has a thickness of from 35 to 150 µm.

20. A roof formed by the membranes of any of claims 12 to 19.

21. The use of a membrane of any of claims 12 to 19.
